# EUROPÄISCHE PATENTSCHRIFT

(11) **EP 1 502 817 B1**
(45) Veröffentlichungstag und Bekanntmachung des Hinweises auf die Patenterteilung: **21.12.2005**
(21) Anmeldenummer: 04016279.4
(22) Anmeldetag: 10.07.2004
(51) Int. Cl.: B60R 3/00, E05F 15/20, E05F 15/00, B60J 5/06

(54) **Fahrzeug mit sensierten Trittstufen in Einstiegsbereichen**
Vehicle with a pressure sensitive step in an entry
Vehicule ayant dans une porte d'accès une marche sensible à la pression

(30) Priorität: 30.07.2003 AT 12052003
(43) Veröffentlichungstag der Anmeldung: 02.02.2005
(73) Patentinhaber: MAN Nutzfahrzeuge Aktiengesellschaft, 80995 München (DE); Mayser GmbH & Co. KG, 89073 Ulm (DE)
(72) Erfinder: Paul, Oliver, Dipl.-Ing., 38312 Cramme (DE); Mecker, Olaf, 38259 Salzgitter-Bad (DE)

(56) Entgegenhaltungen:
- WO-A-01/25129
- WO-A-02/053416
- DE-A- 3 242 134
- DE-A- 4 341 153

## Beschreibung

Die Erfindung betrifft ein Fahrzeug, insbesondere Omnibus, Trambahn oder Personenzug, mit durch Türen schließ- und freigebbaren Einstiegsbereichen, in denen jeweils ein ebener oder durch wenigstens eine Trittstufe gebildeter Bodenabschnitt des Fahrzeugs für ein Ein-und Aussteigen sowie Stehen der Fahrgäste gegeben ist.

Sensierte bewegliche Trittstufen sind bis dato hauptsächlich in Verbindung mit Schienenfahrzeugen bekannt geworden, was insbesondere wegen deren Länge notwendig war und weil die Einstiegsbereiche für den Fahrzeugführer nicht einsichtig waren. Ein Beispiel für eine solche sensierte Trittstufe ist aus der DE 3242134 C2 bekannt. Diese Trittplatte hat einen relativ komplizierten und damit teueren Aufbau.

Bei Omnibussen kamen bisher in der Regel feste, aber auch klappbare Trittstufen zur Anwendung. Als Kontrollorgan für das Betreten der Trittstufen bzw. das Begehen des Einstiegsbereiches dient in den meisten Fällen eine optische Lichtschranke, die, wenn unterbrochen, ein entsprechendes Signal an den Fahrer-Arbeitsplatz lieferte. Solch optische Lichtschranken sind jedoch sehr aufwendig und störanfällig und wegen ihrer exponierten Lage auch Beschädigungen ausgesetzt.

Aufgrund gesetzlicher Vorschriften (§ 35eSTVZO) müssen z. B. auch jene Türen an einem Omnibus, die einem hinter den ersten beiden Einstiegsbereichen gegebenen Einstiegsbereich zugeordnet sind, sogenannte Automatiktüren sein. Das heißt, diese Türen werden ohne aktive Bedienung des Fahrers durch entsprechende Anforderung des Fahrgastes, z. B. durch Betätigung eines Tastschalters geöffnet und schließen nach einer vorgegebenen Zeitspanne wieder. Außerdem sind im Omnibus Mittel vorhanden, die ein Schließen solcher Türen verhindern, solange ein Fahrgastwechsel stattfindet, also Leute ein- und aussteigen. Als solche Mittel dienen in der Regel optische Lichtschranken. Nachteilig ist bei solchen Lichtschranken außer ihrer bereits erwähnten Störanfälligkeit auch, dass bei großer Fahrgastdichte im Omnibus nahe des Lichtschrankenerfassungsbereiches stehende oder drängelnde Fahrgäste die Lichtschranke betätigen, so dass ein Schließen der Türen gar nicht möglich ist oder zumindest nachhaltig verzögert wird.

Es ist daher Aufgabe der Erfindung, für ein Fahrzeug der gattungsgemäßen Art eine einfache und kostengünstig darstellbare sowie robuste und störunanfällige Lösung zu schaffen, die ein Schließen der Türen sicher verhindert solange Personen ein- und aussteigen, aber ein Schließen der Türen zulässt, wenn eingestiegene oder stehende Personen sich ein gewisses Maß von der Türschließposition entfernt befinden.

Diese Aufgabe ist bei einem Fahrzeug der gattungsgemäßen Art erfindungsgemäß mit den im Kennzeichen des Anspruchs 1 angegebenen Merkmalen gelöst.

Vorteilhafte Ausgestaltungen und Details der erfindungsgemäßen Lösung sind in den Unteransprüchen gekennzeichnet.

Die erfindungsgemäße Grundidee besteht darin, die bodenseitig äußere Trittkante eines Einstiegsbereiches zu überwachen, da erfahrungsgemäß jeder Fahrgast beim Ein- und Aussteigen auf diese Trittkante tritt. Fahrgäste, die nicht mehr ein- und aussteigen wollen, stehen in der Regel ein gewisses Maß von dieser Trittkante abgerückt, sodass die Sensorik der sensierten Trittkante nicht aktiviert ist und sich die Türen schließen können. Ein weiterer Vorteil der Erfindung ist darin begründet, dass ein spät ankommender Fahrgast, der während eines Tür-Schließvorganges die Tür erreicht und die sensierte Trittkante betritt, diesen Tür-Schließvorgang unterbricht, die Tür wird wiedergeöffnet und erst nachdem die Trittkante nicht mehr betreten ist, wird der Tür-Schließvorgang wiederholt bzw. beendet.

Nachstehend ist die Erfindung anhand eines in der Zeichnung dargestellten Ausführungsbeispiels noch näher erläutert. Dabei ist in Figur 1 von ein Fahrzeug, bei dem es sich z. B. um einen Omnibus, Personenzug oder eine Trambahn handeln kann, ein Einstiegsbereich in jener Zone gezeigt, die für die Darstellung und das Verständnis der Erfindung notwendig ist. Fig. 2 zeigt schematisch das Betreten der erfindungsgemäßen sensierten Trittkante durch einen Fahrgast beim Einsteigen und Fig. 3 zeigt dieses Betreten der Trittkante beim Aussteigen.

In der Zeichnung sind ein Einstiegsbereich des Fahrzeugs mit 1 und die Tür(en) in diesen mit 2 bezeichnet. Vom Boden des Fahrzeugs ist in der Zeichnung nur ein geringer Teil dargestellt und dies auch nur partiell, nämlich ein ebener oder durch wenigstens eine Trittstufe gebildeter Bodenabschnitt 3, wie er in einem Einstiegsbereich für ein Ein- und Aussteigen oder Stehen der Fahrgäste gegeben ist.

Gemäß der Erfindung ist die äußere Randzone des Bodenabschnitts 3 durch eine beweglich ausgebildete und angeordnete Trittkante 4 gebildet, der eine Sensorik 5 zugeordnet ist, die bei Betreten der Trittstufe 4 aktiviert wird und ein Signal auslöst, das an eine Türschließ- und -öffnungsvorrichtung geht, durch die die von letzterer geöffnete(n) Tür(en) 2, wenigstens solange das Sensorik-Signal ansteht, nicht schließbar sind.

Die bewegliche sensierte Trittkante 4 besteht z. B. aus einer schmalen, sich über die Länge des Einstiegsbereiches 1 erstreckenden, beweglich angeordneten Trittplatte 5, die ein gewisses Maß beabstandet über einer bodenseitig festen Grundplatte 6 angeordnet ist. Die Sensorik 5 ist im Raum zwischen Trittplatte 6 und Grundplatte 7 eingebaut. Die Trittplatte 6 ist im Bereich ihrer Innenkante 8 dreh- und schwenkbeweglich an einer bodenintegralen Vertikalwand 9 gelagert. Außerdem ist die Trittplatte 6 durch mehrere zwischen ihr und der Grundplatte 7 über die Länge verteilt eingebaute vorgespannte Druckfedern 10 in einer zur Grundplatte 7 parallelen, durch ein Anschlagorgan 11 definierten Grundstellung gehalten und bei Betreten durch einen Fahrgast unter Verschwenkung um ihre Drehachse ein gewisses Maß, das durch Anschlagorgane 12, 13 definiert ist, nach unten bewegbar, wodurch die Sensorik 5 aktivierbar ist. Die Sensorik 5 ist durch eine entweder an der Unterseite 14 der Trittplatte 6 oder an der Oberseite 15 der Grundplatte 7 angeordnete elektrische Schaltleiste 16 gebildet, die bei Niederteten der Trittplatte 6 durch ein oder mehrere Betätigungsorgan(e) 17 zusammendrückbar ist, wodurch deren elektrische Kontaktleisten 18, 19 in Schaltkontakt bringbar sind, was die Auslösung des Sensorik-Signals bewirkt. Die ein Teil des Fahrzeug-Bodens bildende Grundplatte 7 schließt sich seitlich außen an einer dickeren Bodenplatte 20 des Fahrzeug-Bodens - einstückig mit dieser oder angebaut an dieser- an und trägt an ihrer Oberseite 15 zwischen zwei zueinander und zur Fahrzeug-Längsrichtung parallelen Längsrippen 21, 22 eingefasst die ein Teil der Sensorik 5 bildende elektrische Schaltleiste 16. An der Oberseite 15 der Grundplatte 7 ist etwas nach innen beabstandet neben den die Schaltleiste 16 aufnehmenden Längsrippen 21, 22 das Anschlagorgan 13 entweder in Form einer sich parallel zu den Längsrippen 21, 22 erstreckenden Anschlagleiste oder in Linie angeordneter Anschlagspuffer gegeben, die mit einer zu ihr bzw. ihnen vertikal fluchtenden Anschlagleiste oder Anschlagpuffern zusammenwirken, die das an der Unterseite 14 der Trittplatte 6 gegebene Anschlagorgan 12 bilden. Das Betätigungsorgan 17 für die Schaltleiste 16 ist an der Unterseite 14 der Trittplatte 6 gegeben und durch eine in Querrichtung gesehen etwa mittig auf der Schaltleiste 16 von oben her zur Einwirkung kommende Betätigungsleiste oder alternativ hierzu in Linie angeordnete Betätigungszapfen gebildet.

Die Drehgelenkstelle für die bewegliche Trittplatte 6 ist im dargestellten Beispiel wie folgt gebildet. Am inneren Endbereich der Trittplatte 6 ist eine im Querschnitt kreisbogensegmentförmige Leiste 23 angeordnet oder ausgebildet, die in einer am oberen Endbereich der bodenintegralen Vertikalwand 9 nach außen abragenden, kreisbogenförmig gekrümmen Führungskulisse 24 gleitfähig aufgenommen ist.

Die elektrische Schaltleiste 16 ist im dargestellten Beispiel durch ein schlauchartiges Hohlprofil aus gummielastischem Material gebildet, in dessen Hohlraum an der diesen oben und unten begrenzenden Wand jeweils eine elektrische Kontaktleiste 18, 19 befestigt ist. Diese Kontaktleisten 18, 19 der Schaltleiste 16 sind an der Bordstromversorgung des Fahrzeugs angeschlossen und über eine Schaltstrecke entweder direkt oder über einen Bordcomputer mit der Tür-Schließ- und -öffnungsvorrichtung, gegebenenfalls auch mit einem optischem und/oder einem akustischen Anzeigegerät am Fahrer-Arbeitsplatz, z. B. Armaturenbrett verbunden, über das dem Fahrer auch solchermaßen das Begehen und Betreten der sensierten Trittkante 4 durch ein- und aussteigende Fahrgäste anzeigbar ist.

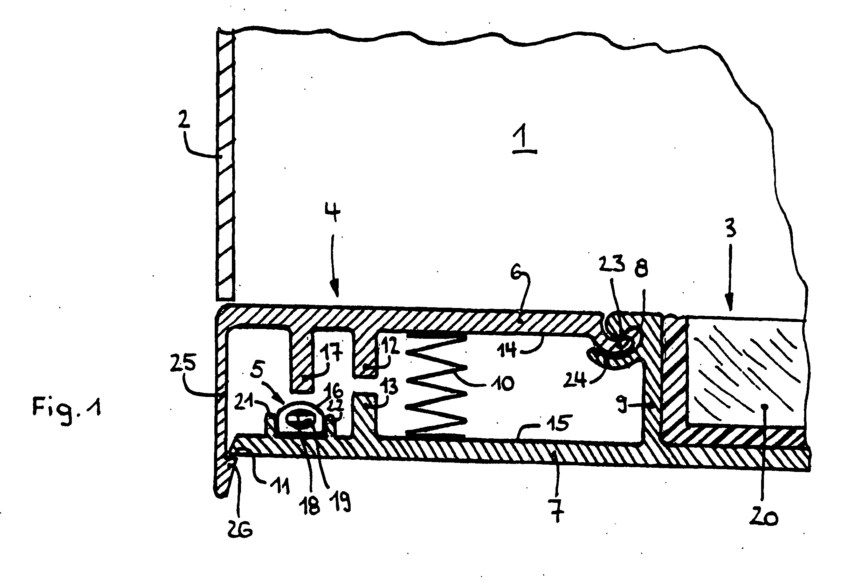

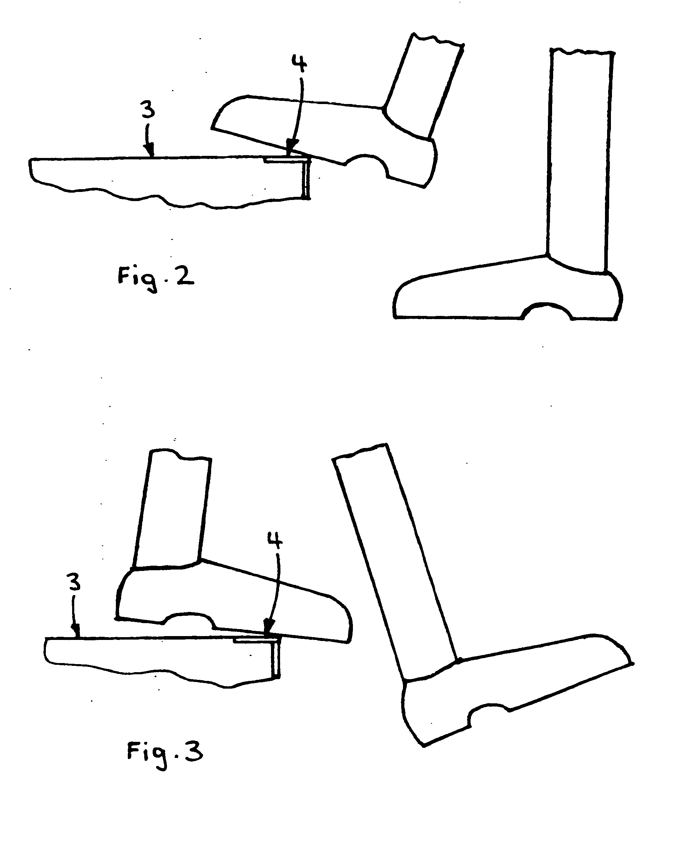

Die bewegliche Trittplatte 6 hat in Fahrzeug-Querrichtung gesehen eine Breite, die etwa zwischen 40 und 100 mm liegt, also kleiner als die Länge des Fahrgastschuhes ist, siehe die Relationen in Fig. 2 und 3. Außerdem ist die sensierte Trittkante 4 außen durch eine an der beweglichen Trittplatte 6 nach unten abragend angeordnete vertikale Außenwand 25 begrenzt. Diese Außenwand 25 überragt mit ihrem unteren Bereich die Grundplatte 7 nach unten und weist dort als Anschlagorgan 11 einen oder mehrere die Grundplatte 7 hintergreifende Vorsprünge 26 auf, der bzw. die im Zusammenwirken mit der Grundplatte 7 die unbelastete, durch die Druckfeder(n) 10 bewirkte Grundstellung der beweglichen Trittplatte 6 festlegt bzw. festlegen.

Die Erfindung ist nicht auf die Ausführungsform des vorbeschriebenen Beispiels beschränkt. Die im Beispiel verwendeten Details sind jederzeit durch gleichwertig und gleichwirkende Maßnahmen zu ersetzen.

### Bezugszeichenliste

- 1 =: Einstiegsbereich
- 2 =: Tür(en)
- 3 =: Bodenabschnitt des Fahrzeug-Bodens
- 4 =: beweglich, sensierte Trittkante
- 5 =: Sensorik
- 6 =: Trittplatte von 4
- 7 =: Grundplatte an 3 von 4
- 8 =: Innenkante von 6
- 9 =: Vertikalwand in 3
- 10 =: Druckfedern
- 11 =: Anschlagorgan an
- 12 =: Anschlagorgan an 6
- 13 =: Anschlagorgan an 7
- 14 =: Unterseite von 6
- 15 =: Oberseite von 7
- 16 =: Schaltleiste von 5
- 17 =: Betätigungsorgan(e) für 16
- 18 =: Kontaktleiste von 16 oben
- 19 =: Kontaktleiste von 16 unten
- 20 =: Bodenplplatte
- 21 =: Längsrippe an 7 für 15
- 22 =: Längsrippe an 7 für 15
- 23 =: Leiste an 6 innen
- 24 =: Führungskulisse für 23
- 25 =: Außenwand von 4 an 5
- 26 =: Vorsprünge an 25

## Patentansprüche

1. Fahrzeug, insbesondere Omnibus, Trambahn oder Personenzug, mit durch Türen schließ- und freigebbaren Einstiegsbereichen, in denen jeweils ein ebener oder durch wenigstens eine Trittstufe gebildeter Bodenabschnitt (3) des Fahrzeugs für ein Ein- und Aussteigen sowie Stehen der Fahrgäste gegeben ist, **dadurch gekennzeichnet dass** die äußere Randzone des Bodenabschnitts (3) im Einstiegsbereich (1) durch eine gegenüber dem Bodenabschnitt beweglich angeordnete Trittkante (4) gebildet und dieser eine Sensorik (5) zugeordnet ist, die bei Betreten der Trittkante (4) aktivierbar ist und ein Signal auslöst, aufgrund dessen jene durch die Türschließ- und -öffnungsvorrichtung geöffnete Tür(en) (2), wenigstens solange das Sensorik-Signal ansteht, nicht schließbar sind.

2. Fahrzeug nach Anspruch 1, **dadurch gekennzeichnet, dass** die bewegliche, sensierte Trittkante (4) aus einer sich über die Länge des Einstiegsbereiches (1) erstreckenden und beabstandet über einer bodenseitig festen Grundplatte (7) beweglich angeordneten, schmalen Trittplatte (6) besteht, und dass die Sensorik (5) im Raum zwischen Trittplatte (6) und Grundplatte (7) eingebaut ist.

3. Fahrzeug nach Anspruch 2, **dadurch gekennzeichnet, dass** die Trittplatte (6) der sensierten Trittkante (4) im Bereich ihrer Innenkante (8) dreh- bzw. schwenkbeweglich an einer bodenintegralen Vertikalwand (9) gelagert ist, dass die Trittplatte (6) außerdem durch mehrere zwischen ihr und der Grundplatte (7) eingebaute, vorgespannte Druckfedern (10) in einer zur Grundplatte (7) parallelen, durch ein Anschlagorgan (11) definierten Grundstellung gehalten ist und bei Betreten durch einen Fahrgast unter Verschwenkung um die Drehachse ein gewisses, durch Anschlagorgane (12, 13) definiertes Maß nach unten bewegbar ist.

4. Fahrzeug nach einem der Ansprüche 2 und 3, **dadurch gekennzeichnet, dass** die Sensorik (5) durch eine entweder unterseitig an der beweglichen Trittplatte (6) der sensierten Trittkante (4) oder oberseitig an der Grundplatte (7) angeordnete elastische Schaltleiste (16) gebildet ist, die bei Niedertreten der Trittplatte (6) durch ein oder mehrere Betätigungsorgan(e) (17) zusammendrückbar und **dadurch** deren elektrische Kontaktleisten (18, 19) in Schaltkontakt bringbar sind, was die Auslösung des Sensorik-Signals bewirkt.

5. Fahrzeug nach einem der Ansprüche 2 bis 4, **dadurch gekennzeichnet, dass** die Grundplatte (7) sich als Teil des Fahrzeug-Bodens seitlich außen an einer dickeren Bodenplatte (20) des Fahrzeug-Bodens - einstückig mit dieser oder angebaut an dieser - anschließt und an ihrer Oberseite (15) zwischen zwei zueinander und zur Fahrzeug-Längsrichtung parallelen Längsrippen (21, 22) eingefasst die ein Teil der Sensorik (5) bildende elektrische Schaltleiste (16) trägt.

6. Fahrzeug nach einem der Ansprüche 2 bis 5, **dadurch gekennzeichnet, dass** an der Oberseite (15) der Grundplatte (7) etwas nach innen beabstandet neben den parallelen, die Schaltleiste (16) aufnehmenden Längsrippen (21, 22) und vorzugsweise parallel zu diesen eine Anschlagleiste (13) oder alternativ hierzu in einer Linie angeordnete Anschlagpuffer vorgesehen sind, die mit einer zu ihr bzw. ihnen vertikal fluchtenden, an der Unterseite (14) der beweglichen Trittplatte (6) angeordneten Anschlagleiste (12) oder Anschlagpuffern zur Begrenzung des Niedertretweges der Trittplatte (6) zusammenwirken.

7. Fahrzeug nach einem der Ansprüche 2 bis 6, **dadurch gekennzeichnet, dass** an der Unterseite (14) der beweglichen Trittplatte (6) als Betätigungsorgan für die oberseitig an der Grundplatte (7) angeordnete elektrische Schaltleiste (16) eine in Querrichtung gesehen etwa mittig auf letztere von oben zur Einwirkung kommende Betätigungsleiste (17) oder alternativ hierzu in Linie angeordnete Betätigungszapfen vorgesehen sind.

8. Fahrzeug nach einem der Ansprüche 2 bis 7, **dadurch gekennzeichnet, dass** als Drehgelenkstelle für die bewegliche Trittplatte (6) an deren innerem Ende eine kreisbogensegmentförmige Leiste (23) angeordnet ist, die in einer am oberen inneren Endbereich der bodenseitigen Vertikalwand (9) nach außen abragenden, kreisbogenförmig gekrümmten Führungskulisse (24) gleitfähig angenommen ist.

9. Fahrzeug nach einem der Ansprüche 4 bis 8, **dadurch gekennzeichnet, dass** die elektrische Schaltleiste (16) durch ein Hohlprofil aus gummielastischem Material gebildet ist, in dessen Hohlraum an der diesen unten und oben jeweils begrenzenden Wand jeweils eine Kontaktleiste (18, 19) gegeben ist.

10. Fahrzeug nach einem der Ansprüche 4 bis 9, **dadurch gekennzeichnet, dass** die Kontaktleisten (18, 19) der Schaltleiste (16) an der Bordstromversorgung des Fahrzeugs angeschlossen und über eine Schaltstrecke entweder direkt oder über einen Bordcomputer mit der Tür-Schließ- und -öffnungsvorrichtung, gegebenenfalls auch mit einem optischem und/oder akustischen Anzeigeelement am Fahrer-Arbeitsplatz verbunden sind, über das auch dem Fahrer das Begehen bzw. Betreten der sensierten Trittkante (4) anzeigbar ist.

11. Fahrzeug nach einem der Ansprüche 2 bis 10, **dadurch gekennzeichnet, dass** die sensierte Trittkante (4) außen durch eine sich an der beweglichen Trittplatte (6) nach unten abragend angeordnete vertikale Außenwand (25) begrenzt ist, die mit ihrem unteren Bereich die Grundplatte (7) nach unten überragt und dort einen oder mehrere nach innen abragende Vorsprünge (26) aufweist, die die Grundplatte (7) hintergreifen und das Anschlagorgan (11) bilden, welches im Zusammenwirken mit der Grundplatte (7) die unbelastete Grundstellung der beweglichen Trittplatte (6) festlegt.

12. Fahrzeug nach einem der Ansprüche 2 bis 11, **dadurch gekennzeichnet, dass** die bewegliche Trittplatte (6) der sensierten Trittkante (4) eine Breite in Fahrzeug-Querrichtung gesehen von etwa 40 bis 100 mm hat.

## Claims

1. Vehicle, particularly a bus/coach, tram or passenger train, with entrance areas which can be closed and opened by means of doors, in each of which entrance areas a floor section (3) of the vehicle is either level or equipped with at least one step and provided for boarding and exiting and for standing passengers, **characterised in that** the outer rim zone of the floor section (3) in the entrance area (1) is formed by a step edge (4) which is movably arranged in respect of the floor section and to which a sensor system (5) is allocated which can be activated if the step edge (4) is stepped on and which triggers a signal, as a result of which the door(s) (2) opened by the door-closing and opening device cannot be closed while the sensor signal is present.

2. Vehicle according to Claim 1, **characterised in that** the movable, sensorised step edge (4) consists of a narrow step plate (6) extending over the length of the entrance area (1) and movably arranged at a distance above a floor-mounted base plate (7) and that the sensor system (5) is installed in the space between the step plate (6) and the base plate (7).

3. Vehicle according to Claim 2, **characterised in that** in the area of its inner edge (8) the step plate (6) of the sensorised step edge (4) is fitted to a floor-integral vertical wall (9) in a rotary and slewable manner, that the step plate (6) is also kept in a basic position by several preloaded pressure springs (10) installed between it and the base plate (7), said basic position being parallel to the base plate (7) and defined by a stop organ (11), and that when a passenger steps on said step plate (6) it slews about its axis of rotation and can be moved downwards by a certain travel distance defined by stop organs (12, 13).

4. Vehicle according to one of the Claims 2 and 3, **characterised in that** the sensor system (5) is formed by an elastic switching strip (16) which is arranged either on the underside of the movable step plate (6) of the sensorised step edge (4) or on the top side of the base plate (7) and, when the step plate (6) is pressed downwards, can be compressed by one or several actuating organ(s) (17) and that, as a result, its electric contact strips (18, 19) can be brought into switching contact, which triggers the sensor signal.

5. Vehicle according to one of the Claims 2 to 4, **characterised in that** the base plate (7) as part of the vehicle floor either forms a single piece with or is attached to a thicker floor plate (20) of the vehicle floor on the lateral outer side, is, at its top side (15), enclosed between two longitudinal ribs (21, 22) parallel to each other and to the vehicle longitudinal axis and carries the electric switching strip (16) forming part of the sensor system (5).

6. Vehicle according to one of the Claims 2 to 5, **characterised in that** on the top side (15) of the base plate (7) a stop strip (13) or, alternatively, stop buffers forming a line are arranged somewhat towards the inside at a distance to the parallel longitudinal ribs (21, 22) supporting the switching strip (16) and preferably parallel to said ribs and act together with a stop strip (12) or with stop buffers for limiting the downward travel of the step plate (6), which stop strip (12) or stop buffers are arranged on the underside (14) of the movable step plate (6) and are in vertical alignment with said stop strip (13) or stop buffers.

7. Vehicle according to one of the Claims 2 to 6, **characterised in that** as an actuating organ for the electric switching strip (16) arranged on the top side of the base plate (7) an actuating strip (17) or, alternatively, actuating pins arranged in a line are provided on the underside (14) of the movable step plate (6), whereby, if viewed in transverse direction, said actuating strip (17) acts from above approximately on the centre of said electric switching strip (16).

8. Vehicle according to one of the Claims 2 to 7, **characterised in that** as a swivel joint for the movable step plate (6) a segment-shaped strip (23) is provided at the inner end of said step plate (6), which strip (23) is supported in a sliding manner in an outward-projecting arc-curved guide block (24) in the upper inner end area of the floor-mounted vertical wall (9).

9. Vehicle according to one of the Claims 4 to 8, **characterised in that** the electric switching strip (16) is formed by a hollow section made of rubber-elastic material, in whose hollow space a contact strip (18, 19) is fitted to the lower and upper end of the wall limiting said hollow space at the bottom and top.

10. Vehicle according to one of the Claims 4 to 9, **characterised in that** the contact strips (18, 19) of the switching strip (16) are connected to the on-board power supply of the vehicle and to the door-closing and opening device via a break either directly or via an on-board computer and, if necessary, also to a visual and/or acoustic display element at the driver's station, via which it can be indicated to the driver that the sensorised step edge (4) is being walked or stepped on.

11. Vehicle according to one of the Claims 4 to 10, **characterised in that** the outer end of the sensorised step edge (4) is limited by a vertical outer wall (25) arranged on the movable step plate (6), extending downwards beyond the lower end of the base plate (7) and provided there with one or several inward-projecting protrusions (26) overlapping the base plate (7) and forming the stop organ (11) which acts together with the base plate (7) and determines the unloaded basic position of the movable step plate (6).

12. Vehicle according to one of the Claims 2 to 11, **characterised in that** if viewed in vehicle transverse direction the movable step plate (6) of the sensorised step edge (4) has a width of some 40 to 100 mm.

## Revendications

1. Véhicule, en particulier car, autobus, tramway ou train de voyageurs, comportant des zones d'accès s'ouvrant et se fermant par portes dans lesquelles est prévue une section de plancher (3) du véhicule, plane ou constituée d'au moins une marche, permettant aux voyageurs de monter et de descendre ainsi que de se tenir debout, **caractérisé en ce que** le bord extérieur de la section de plancher (3) de la zone d'accès (1) est constitué d'un seuil (4) mobile par rapport à la section de plancher (3) et associé à un dispositif à capteurs (5) activable par pose du pied sur le seuil (4) et déclenchant alors un signal qui empêche la ou les portes (2) ouvertes de se refermer par le dispositif d'ouverture et de fermeture des portes, tout au moins tant que le signal du dispositif à capteurs est présent.

2. Véhicule selon la revendication 1, **caractérisé en ce que** le seuil mobile muni de capteurs (4) est constitué d'une étroite marche sensible mobile (6) s'étendant sur la longueur de la zone d'accès (1) et disposée à distance d'une plaque de base (7) solidaire du plancher et **en ce que** le dispositif à capteurs (5) est monté dans l'espace compris entre la marche sensible (6) et la plaque de base (7).

3. Véhicule selon la revendication 2, **caractérisé en ce que** la marche sensible (6) du seuil muni de capteurs (4) est articulée en rotation ou pivotement, au niveau de son bord intérieur (8), sur une paroi verticale (9) faisant partie intégrante du plancher, **en ce que** la marche sensible (6) est en outre maintenue par plusieurs ressorts précomprimés (10) montés entre elle et la plaque de base (7) dans une position de base parallèle à la plaque de base (7) et définie par un organe de butée (11) et que, lorsqu'un voyageur y pose le pied, la marche sensible (6) est mobile vers le bas sur une certaine course définie par des organes de butée (12, 13) par pivotement autour d'un axe de rotation.

4. Véhicule selon l'une des revendications 2 et 3, **caractérisé en ce que** le dispositif à capteurs (5) est constitué d'une baguette de commutation élastique (16) disposée soit sur la face inférieure de la marche sensible mobile (6) du seuil muni de capteurs (4), soit sur la face supérieure de la plaque de base (7), ladite baguette (16) étant comprimable par un ou plusieurs organes d'actionnement (17) lors de la pose du pied sur la marche sensible (6) et amenant ainsi en contact ses barrettes de contact électriques (18, 19), ce qui produit le déclenchement du signal du dispositif à capteurs.

5. Véhicule selon l'une des revendications 2 à 4, **caractérisé en ce que** la plaque de base (7), faisant partie du plancher du véhicule, jouxte sur son côté extérieur une plaque plus épaisse (20) du plancher du véhicule - avec laquelle elle fait bloc ou sur laquelle elle est rapportée - et porte sur sa face supérieure (15), encastrée entre deux nervures longitudinales (21, 22) parallèles entre elles et à l'axe longitudinal du véhicule, une partie de la baguette de commutation électrique (16) constituant une partie du dispositif à capteurs (5).

6. Véhicule selon l'une des revendications 2 à 5, **caractérisé en ce que** sont prévus sur la face supérieure (15) de la plaque de base (7), à une certaine distance vers l'intérieur, à côté des nervures longitudinales (21, 22) recevant la baguette de commutation (16) et de préférence parallèlement à ces dernières, une réglette de butée (13) ou, à titre d'alternative, des plots de butée disposés en ligne, laquelle ou lesquels sont associés à une réglette de butée (12) ou des plots de butée disposés sur la face inférieure (14) de la marche sensible mobile (6) et alignés verticalement avec elle ou avec eux en vue de limiter le débattement de la marche sensible (6).

7. Véhicule selon l'une des revendications 2 à 6, **caractérisé en ce que** sont prévus sur la face inférieure (14) de la marche sensible marche sensible (6), en tant qu'organe d'actionnement de la baguette de commutation électrique (16) disposée sur la face supérieure de la plaque de base (7), une réglette d'actionnement venant agir par le haut à peu près au milieu sur ladite baguette (16), vu dans le sens transversal, ou, à titre d'alternative, des ergots d'actionnement disposés en ligne.

8. Véhicule selon l'une des revendications 2 à 7, **caractérisé en ce qu'**est disposée comme articulation en rotation de la marche sensible mobile (6), à son extrémité intérieure, une baguette en forme d'arc de cercle (23) reçue par glissement dans une coulisse de guidage (24) cintrée en arc de cercle et en saillie vers l'extérieur à l'extrémité intérieure supérieure de la paroi verticale (9) du plancher.

9. Véhicule selon l'une des revendications 4 à 8, **caractérisé en ce que** la baguette de commutation électrique (16) est constituée d'un profilé creux en matériau élastique, à l'intérieur duquel sont prévues deux barrettes de contact (18, 19), l'une au niveau de la paroi le limitant vers le bas et l'autre au niveau de celle le limitant vers le haut.

10. Véhicule selon l'une des revendications 4 à 9, **caractérisé en ce que** les barrettes de contact (18, 19) de la baguette de commutation (16) sont raccordées à l'alimentation électrique de bord du véhicule et sont reliées par un circuit, soit directement, soit par l'intermédiaire d'un ordinateur de bord, au dispositif d'ouverture et de fermeture des portes, de même que, le cas échéant, à un élément d'affichage visuel et/ou acoustique disposé dans le poste de travail du chauffeur et permettant d'indiquer au chauffeur qu'un passager a posé un pied sur le seuil muni de capteur (4).

11. Véhicule selon l'une des revendications 2 à 10, **caractérisé en ce que** le seuil muni de capteurs (4) est limité à l'extérieur par une paroi extérieure verticale (25) disposée en saillie vers le bas par rapport à la marche sensible mobile (6), la partie inférieure de ladite paroi (25) dépassant vers le bas la plaque de base (7) et présentant à ce niveau une ou plusieurs protubérances (26) prenant derrière la plaque de base (7) et constituant l'organe de butée (11) qui, en association avec la plaque de base (7), détermine la position de base de la marche sensible mobile (6) en l'absence de charge.

12. Véhicule selon l'une des revendications 2 à 11, **caractérisé en ce que** la marche sensible mobile (6) du seuil muni de capteurs (4) a, vu dans le sens transversal du véhicule, une largeur d'environ 40 à 100 mm.
